(19) Europäisches Patentamt
European Patent Office
Office européen des brevets

(11) Veröffentlichungsnummer: **0 376 892 A2**

(12) **EUROPÄISCHE PATENTANMELDUNG**

(21) Anmeldenummer: **89810982.2**

(22) Anmeldetag: **22.12.89**

(51) Int. Cl.5: **C08G 73/10, C08G 73/14, C08G 69/26, C08G 69/48**

(30) Priorität: **30.12.88 CH 4854/88**

(43) Veröffentlichungstag der Anmeldung: **04.07.90 Patentblatt 90/27**

(84) Benannte Vertragsstaaten: **DE FR GB IT NL SE**

(71) Anmelder: **CIBA-GEIGY AG**
**Klybeckstrasse 141**
**CH-4002 Basel(CH)**

(72) Erfinder: **Eldin, Sameer H., Dr.**
**Route de Schiffenen 10**
**CH-1700 Fribourg(CH)**
Erfinder: **Darms, Roland, Dr.**
**Kleinfeldweg 3**
**CH-4106 Therwil(CH)**

(54) **Vernetzbare Polyamide, Poylamid-amidsäuren, Polyamidsäuren sowie die zum entsprechenden Polyamidimid oder Polyimid cyclisierten Derivate.**

(57) Polyamid, Polyamid-amidsäuren oder Polyamidsäuren, enthaltend das wiederkehrende Strukturelement der Formel I

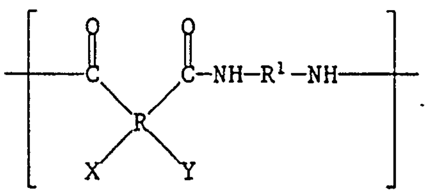

(I),

sowie die zum entsprechenden Polyamidimid bzw. Polyimid cyclisierten Derivate, worin X und Y je für -H oder -COOH stehen, R und $R^1$ je einen aliphatischen, cycloaliphatischen oder aromatischen Rest bedeutet, wobei mindestens 1 Mol % der Reste $R^1$ für einen Rest der Formel

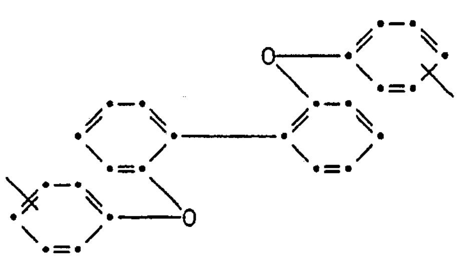

(Ia)

stehen, und enthaltend reaktive Endgruppen der Formel III, V, VI; VII, VIII, IX, X oder XI

EP 0 376 892 A2

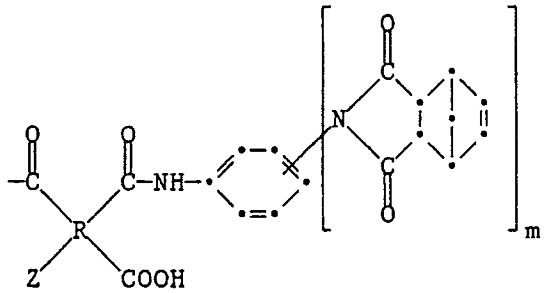

(III),

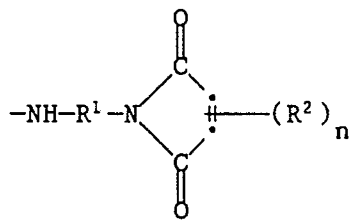

(V),

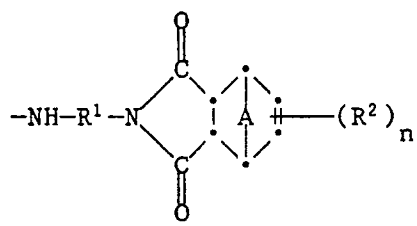

(VI),

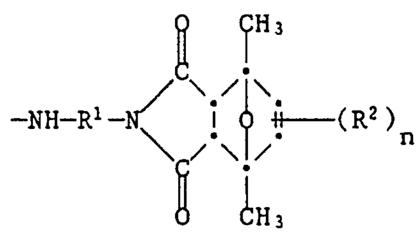

(VII),

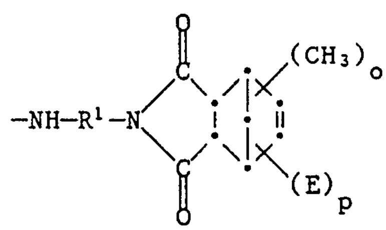

(VIII),

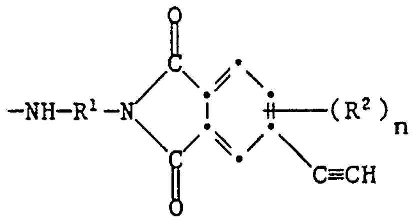

(IX),

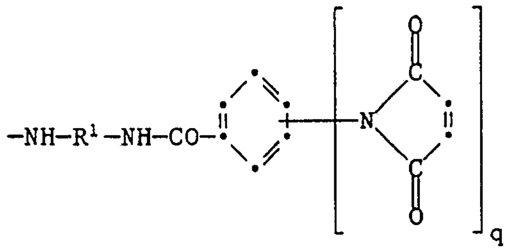

(X) oder

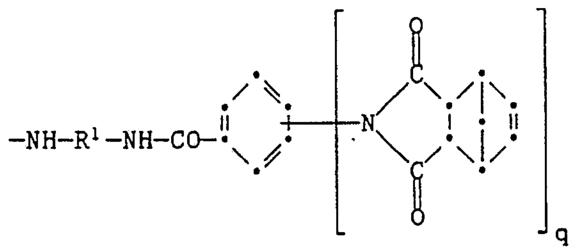

(XI),

worin Z für X oder Y steht, R und $R^1$ die gleiche Bedeutung wie in Formel I haben, m die Zahl 1 oder 2 bedeutet,
$R^2$ für ein $C_1$-$C_4$-Alkyl, $C_1$-$C_4$-Alkoxy, ein unsubstituiertes oder durch Hydroxygruppen oder Halogenatome substituiertes Phenyl oder Naphthyl und n für Null oder die Zahl 1 oder 2 stehen,
A einen der Reste $-CH_2-$, $-\underset{|}{C}H-CH_3$, -S-, -O- oder $-SO_2-$ bedeutet,
E für Allyl oder Methallyl,
o für Null oder die Zahl 1 und
p und q je für die Zahl 1 oder 2 stehen, zeigen nach der Härtung eine besonders hohe thermische Beständigkeit und eignen sich insbesondere zur Herstellung von Faserverbundsystemen.

**Vernetzbare Polyamide, Polyamid-amidsäuren, Polyamidsäuren sowie die zum entsprechenden Polyamidimid oder Polyimid cyclisierten Derivate**

Der Gegenstand vorliegender Erfindung betrifft neue vernetzbare, bestimmte reaktive Endgruppen aufweisende Polyamide, Polyamid-amidsäuren, Polyamidsäuren sowie die zum entsprechenden Polyamidimid oder Polyimid cyclisierten Derivate, enthaltend als Diamin ein 2,2′-Di-(aminophenoxy)-biphenyl.

Polyamide, Polyamid-amidsäuren, Polyamidsäuren und die entsprechenden cyclisierten Derivate, welche unter Verwendung eines 2,2′-Di-(aminophenoxy)-biphenyls hergestellt wurden und keine vernetzbaren Endgruppen aufweisen, sind aus der DE-OS 27 26 541 bekannt. Die mechanischen Festigkeiten der aus solchen Polymeren hergestellten Formstoffe sind gering.

Oligomere mit thermisch vernetzbaren Endgruppen sind beispielsweise aus dem US-Patent 4,229,750, der EP-Anmeldung 0 277 476 oder der JP-Anmeldung Sho 60-128274 (Kokai Sho 61-287938) bekannt. Diese Oligomere enthalten als aromatische mehrkernige Diamine nur lineare Verbindungen.

Es wurde nun gefunden, dass man durch Vernetzung von bestimmte reaktive Endgruppen aufweisenden Polyamiden, Polyamid-amidsäuren, Polyamidsäuren oder den entsprechenden cyclisierten Derivaten, die als Diamin ein 2,2′-Di-(aminophenoxy)-biphenyl enthalten, Formstoffe mit einer besseren thermischen Beständigkeit erhält.

Gegenstand vorliegender Erfindung sind somit Polyamide, Polyamid-amidsäuren oder Polyamidsäuren, enthaltend das wiederkehrende Strukturelement der Formel I

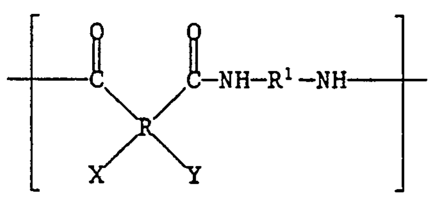

(I),

sowie die zum entsprechenden Polyamidimid bzw. Polyimid cyclisierten Derivate, worin X und Y unabhängig voneinander je für -H oder -COOH stehen, R einen aliphatischen Rest mit mindestens 2 Kohlenstoffatomen, einen cycloaliphatischen, carbocyclisch-aromatischen oder heterocyclisch-aromatischen Rest bedeutet, wobei die Carbonamid- und Carboxylgruppen an verschiedene Kohlenstoffatome gebunden sind und sich die Carboxylgruppen, falls R einen cyclischen Rest und mindestens eines von X oder Y für die Carboxylgruppe steht, je in ortho-Stellung zu einer Carbonamidgruppe befinden, und $R^1$ einen aliphatischen Rest mit mindestens zwei Kohlenstoffatomen, einen cycloaliphatischen, araliphatischen, carbocyclisch-aromatischen oder heterocyclisch-aromatischen Rest bedeutet, wobei mindestens 1 Mol % der Reste $R^1$ für einen Rest der Formel Ia

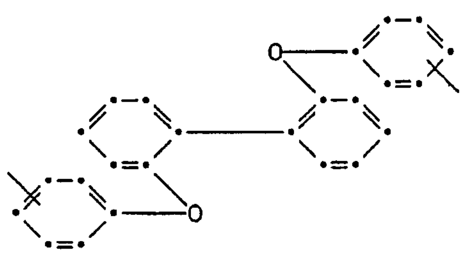

(Ia)

stehen, dadurch gekennzeichnet, dass mindestens 25 Mol % der endständigen Anhydridgruppen der Formel II oder IIa

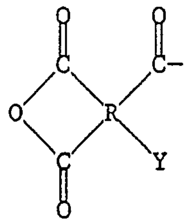 (II) oder 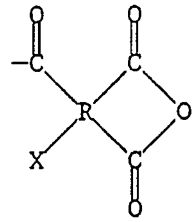 (IIa),

worin X, Y und R die gleiche Bedeutung wie in Formel I haben, als eine Gruppe der Formel III

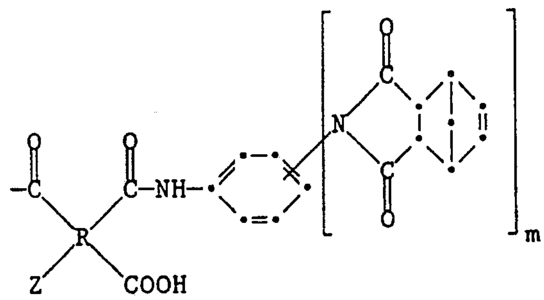 (III)

vorliegen, worin Z für X oder Y steht und m die Zahl 1 oder 2 bedeutet, mindestens 25 Mol % der endständigen Aminogruppen der Formel IV

$-NH-R^1-NH_2$ (IV)

worin $R^1$ die gleiche Bedeutung wie in Formel I hat, als eine Gruppe der Formel V, VI, VII, VIII, IX, X oder XI

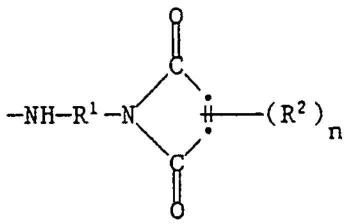

(V),

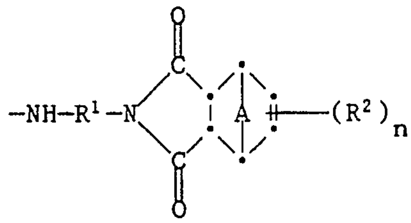

(VI),

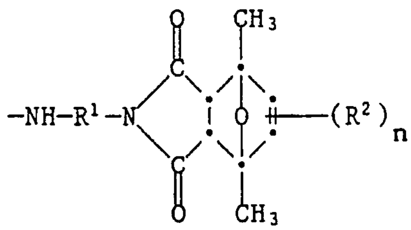

(VII),

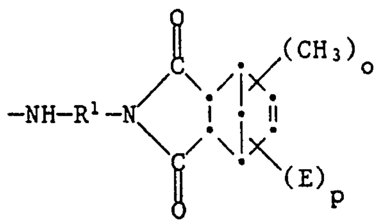

(VIII),

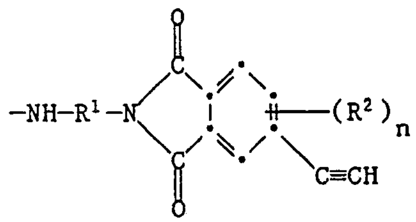

(IX),

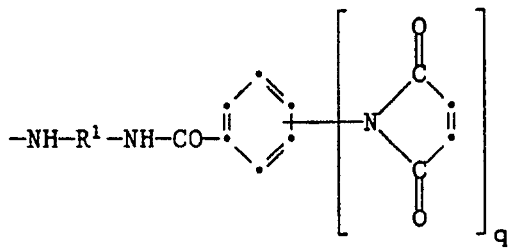

(X) oder

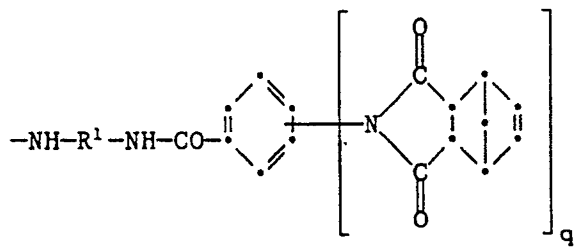

(XI)

vorliegen, worin $R^1$ die gleiche Bedeutung wie in Formel I hat,
$R^2$ für ein $C_1$-$C_4$-Alkyl, $C_1$-$C_4$-Alkoxy, ein unsubstituiertes oder durch Hydroxygruppen oder Halogenatome substituiertes Phenyl oder Naphthyl und n für Null oder die Zahl 1 oder 2 stehen,
A einen der Reste $-CH_2-$, $-CH-CH_3$, -S-, -O- oder $-SO_2-$ bedeutet,
E für Allyl oder Methallyl,
o für Null oder die Zahl 1 und
p und q je für die Zahl 1 oder 2 stehen, oder
mindestens 25 Mol % aller endständigen Anhydridgruppen und endständigen Aminogruppen der Formeln II, IIa und IV als eine Gruppe der Formel III und eine Gruppe der Formeln V bis XI vorliegen, wobei der Anteil an Gruppen der Formel III mindestens 1 Mol % beträgt.

Die erfindungsgemässen Polymere weisen im allgemeinen eine inhärente Viskosität ($\eta_{inh.}$) von 0,1 bis 2,5, vorzugsweise von 0,1 bis 1,5, insbesondere von 0,1 bis 0,75, auf.

Es ist allgemein bekannt, dass die inhärente Viskosität ein Mass für das Molekulargewicht von Polymeren darstellt. Die angegebenen Werte der spezifischen Viskosität von 0,1 bis 2,5 entsprechen einem durchschnittlichen Molekulargewichtsbereich von etwa $10^3$ bis $10^6$.

Vorzugsweise sind in den erfindungsgemässen Polymeren mindestens 40 Mol %, insbesondere mindestens 50 Mol %, aller endständigen Anhydrid- oder Aminogruppen mit einer reaktiven Gruppe der Formel III oder V bis XI verkappt. In einer besonderen Ausführungsform der Erfindung sind alle endständigen Anhydrid- oder Aminogruppen mit einer reaktiven Gruppe der Formel III oder V bis XI verkappt.

Die erfindungsgemässen Polymere weisen vorzugsweise eine Endgruppe der Formel III, V, VI oder XI, insbesondere eine Endgruppe der Formel III oder XI, auf.

Ferner stehen in den wiederkehrenden Strukturelementen der Formel I vorzugsweise mindestens 30 Mol %, insbesondere mindestens 50 Mol % der Reste $R^1$ für einen Rest der Formel Ia.

In den einzelnen Strukturelementen der Formel I können R, X, Y und $R^1$ unterschiedliche Bedeutung haben. Bei den erfindungsgemässen Polymeren handelt es sich somit um Homopolymere oder um Copolymere mit statistischer Verteilung einzelner Strukturelemente mit unterschiedlicher Bedeutung von R, X, Y oder $R^1$.

Im Strukturelement der Formel I stellen X und Y vorzugsweise je eine Carboxylgruppe dar.

Stellt R im Strukturelement der Formel I einen aliphatischen Rest dar, so handelt es sich bevorzugt um unsubstituierte, geradkettige oder verzweigte Alkylengruppen mit 2-10 Kohlenstoffatomen. Bei durch R dargestellten cycloaliphatischen Resten handelt es sich vor allem um 5-oder 6-gliedrige Cycloalkylengruppen.

Bedeutet R einen carbocyclisch-aromatischen Rest, so weist dieser bevorzugt mindestens einen 6-gliedrigen Ring auf; insbesondere handelt es sich dabei um monocyclische, um kondensierte polycyclische oder um polycyclische Reste mit mehreren cyclischen, kondensierten oder nicht kondensierten Systemen, die miteinander direkt oder über Brückenglieder verbunden sein können. Als geeignete Brückenglieder seien beispielsweise erwähnt

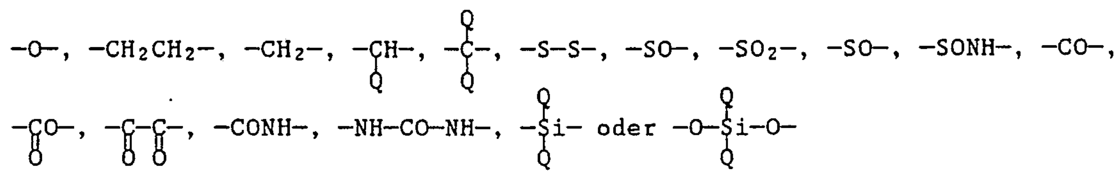

worin Q eine Alkylgruppe mit 1-6, vorzugsweise 1-4 Kohlenstoffatomen oder eine Phenylgruppe bedeutet.

Bedeutet R einen heterocyclisch-aromatischen Rest, so kommen insbesondere 5- oder 6-gliedrige heterocyclisch-aromatische, gegebenenfalls benzo-kondensierte, O-, N- und/oder S-haltige Ringsysteme in Betracht.

Durch R dargestellte carbocyclisch-aromatische oder heterocxyclisch-aromatische Reste können auch substituiert sein, beispielsweise durch Nitrogruppen, Alkylgruppen mit 1-4 Kohlenstoffatomen, Trifluormethylgruppen, Halogenatome, insbesondere Chlor, Silyl-, Sulfonsäure- oder Sulfamoylgruppen.

Durch $R^1$ dargestellte aliphatische, araliphatische, cycloaliphatische, carbocyclisch-aromatische oder heterocyclisch-aromatische Reste können unsubstituiert oder substituiert sein, z.B. durch Halogenatome, wie Fluor, Chlor oder Brom, oder durch Alkyl- oder Alkoxygruppen mit je 1-4 Kohlenstoffatomen.

Als aliphatische Reste $R^1$ kommen vor allem geradkettige oder verzweigte Alkylengruppen mit 2-12 Kohlenstoffatomen in Betracht, wobei die Alkylenkette auch durch Heteroatome, wie O-, S- oder H-Atome, unterbrochen sein kann.

$R^1$ in der Bedeutung eines cycloaliphatischen Restes stellt z.B. die 1,3-oder 1,4-Cyclohexylen-, 1,4-Bis-(methylen)-cyclohexan- oder Dicyclohexylmethangruppe dar, während als araliphatische Reste vor allem 1,3-, 1,4-oder 2,4-Bis-alkylenbenzol-, 4,4'-Bis-alkylen-diphenyl-und 4,4'-Bis-alkylen-diphenylätherreste in Betracht kommen.

Stellt $R^1$ einen carbocyclisch-aromatischen Rest dar, so handelt es sich dabei vorzugsweise um monocyclische, um kondensierte polycyclische oder um unkondensierte bicyclische aromatische Reste, wobei bei letzteren die Aromatenkerne, über ein Brückenglied miteinander verbunden sind. Als Brückenglieder kommen die gleichen, bei der Besprechung von R genannten Gruppen in Betracht.

Falls $R^1$ einen heterocyclisch-aromatischen Rest bedeutet, so handelt es sich insbesondere um heterocyclisch-aromatische 5- oder 6-gliedrige, O-, N- und/oder S-haltige Ringe.

Vorzugsweise stellt R eine unsubstituierte Alkylengruppe mit 4-10 Kohlenstoffatomen, einen unsubstituierten monocyclischen, einen kondensierten bicyclischen oder einen unkondensierten bycyclischen aromatischen Rest dar, wobei bei letzterem die Aromatenkerne über das Brückenglied -O-, -CO- oder -$SO_2$- miteinander verbunden sind, während $R^1$ eine unsubstituierte Alkylengruppe mit 2-10 Kohlenstoffatomen, eine Bis-(methylen)-cyclohexangruppe, einen unsubstituierten oder durch Halogenatome, Alkyl- oder Alkoxygruppen mit je 1-4 Kohlenstoffatomen substituierten monocyclischen oder unkondensierten bicyclischen aromatischen Rest bedeutet.

Besonders bevorzugt sind definitionsgemässe Polymere, worin im Strukturelement der Formel I R einen Benzolring oder das Benzophenonringsystem, X und Y je eine Carboxylgruppe und $R^1$ die 2,6-Toluol-, 1,5-Naphthalin- oder 1,3-Phenylengruppe, den 4,4'-Diphenylmethan- oder 4,4'-Diphenylätherrest und einen Rest der Formel Ia bedeuten, der in para- oder ortho-Stellung, vorzugsweise in para-Stellung an die NH-Gruppen in Formel I gebunden ist, sowie die zum entsprechenden Polyimid cyclisierten Derivate.

Die erfindungsgemässen Polyamide, Polyamid-amidsäuren sowie die zum entsprechenden Polyamidimid oder Polyimid cyclisierten Derivate können hergestellt werden, indem man

(a) 1 Mol % einer Verbindung enthaltend das wiederkehrende Strukturelement der Formel I und endständige Anhydridgruppen der Formeln II und IIa mit 0,5 bis 2 Mol einer Verbindung der Formel IIIa

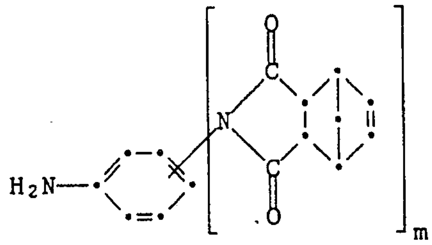

(IIIa)

umsetzt, worin m die gleiche Bedeutung wie in Formel III hat, oder

(b) 1 Mol einer Verbindung enthaltend das wiederkehrende Strukturelement der Formel I und entständige Aminogruppen der Formel IV mit 0,5 bis 2 Mol einer Verbindung der Formeln Va bis XIa

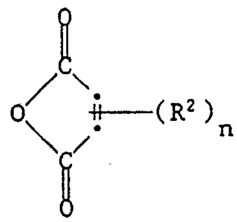

(Va),

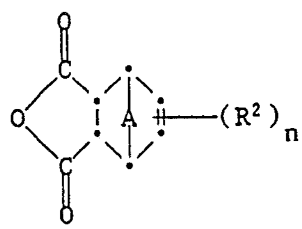

(VIa)

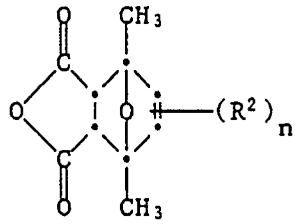

(VIIa),

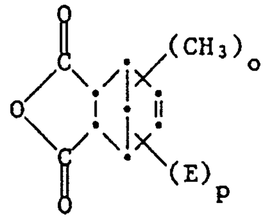

(VIIIa),

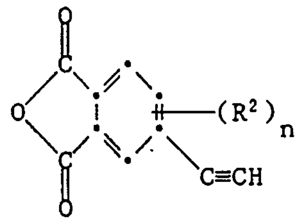

(IXa),

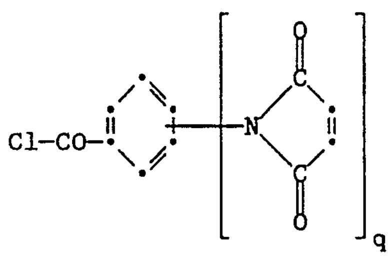

(Xa), oder

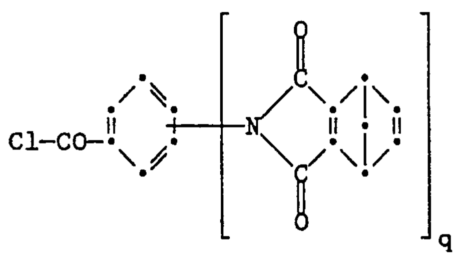

(XIa),

umsetzt, worin $R^2$, A, E, n, o, p und q die gleiche Bedeutung wie in Formel V bis XI haben, oder

(c) 1 Mol einer Verbindung enthaltend das wiederkehrende Strukturelement der Formel I und entständige Anhydridgruppen der Formeln II und IIa und endständige Aminogruppen der Formel IV mit 0,1 bis 1,9 Mol einer Ver bindung der Formel IIIa und mit 0,1 bis 1,9 Mol einer Verbindung der Formeln Va bis XIa umsetzt, wobei die Gesamtmenge an Verbidungen der Formeln IIIa und Va bis XIa 0,5 bis 2,0 Mol beträgt, und das erhaltene Polymer, worin X oder Y sowie X und Y für den Rest -COOH stehen, gegebenenfalls anschliessend zu den Polyamidimiden bzw. Polyimiden cyclisiert.

Im allgemeinen führt man die oben angegebene Umsetzung in einem üblichen inerten organischen Lösungsmittel, vorzugsweise in einem polaren, aprotischen Lösungsmittel, wie beispielsweise Dimethylsulfoxid, Dimethylacetamid, Diäthylacetamid, Tetramethylharnstoff, N-Methylcaprolactam, N-Methylpyrrolidon, Aceton, Dioxan, Essigester oder Tetrahydrofuran, durch. Dabei werden Temperaturen von etwa -20 °C bis etwa 50 °C angewendet.

Die allfällige Cyclisierung der nach der Verkappung der Anhydrid- oder Aminoendgruppen anfallenden

Polyamidsäuren oder Polyamid-amidsäuren erfolgt nach an sich bekannter Weise chemisch oder thermisch.

Die chemische Cyclisierung wird zweckmässig durch Behandlung mit einem Dehydratisierungsmittel allein oder im Gemisch mit einem tertiären Amin vorgenommen. In Frage kommen z.B. Essigsäureanhydrid, Propionsäureanhydrid und Dicyclohexylcarbodiimid oder Gemisch von Essigsäureanhydrid und Triäthylamin.

Die thermische Cyclisierung wird durch Erhitzen auf Temperaturen von etwa 50 °C bis 300 °C, vorzugsweise etwa 150 °C bis 250 °C, und gegebenenfalls unter Zusatz eines inerten organischen Lösungsmittels vorgenommen.

Verbindungen bestehend aus wiederkehrenden Strukturelementen der Formel I und enthaltend endständige Anhydrid- oder endständige Aminogruppen der Formeln II, IIa oder IV sind aus der DE-OS 27 26 541 bekannt und können nach dem dort beschriebenen Verfahren hergestellt werden.

Verbindungen der Formel IIIa, wie beispielsweise Endo-methylentetrahydrophthalsäure-(4-aminophenyl)-imid, sind aus der DE-OS 23 62 780 bekannt.

Unsubstituiertes oder substituierte Maleinsäureanhydride der Formel Va stellen ebenfalls bekannte Verbindungen dar.

Verbindungen der Formel VIa, wie beispielsweise Allyl-bicyclo[2.2.1]-hept-5-en-2,3-dicarbonsäureanhydrid (Allylnadicanhydrid), sind aus der EP-Anmeldung 272 210 oder dem US-Patent 3,105,839 bekannt. Verbindungen der Formeln VIa bis IXa werden ferner im US-Patent 4,604,437 oder in der EP-Anmeldung 277 476 beschrieben.

Verbindungen der Formel Xa, wie beispielsweise 4-Maleinimidylbenzoesäurechlorid, sind aus dem CA-Patent 959,494 bekannt und Verbindungen der Formel XIa, wie beispielsweise Bis-(bicyclo[2.2.1]hept-5-en-2,3-dicarbonsäureimidylbenzoesäurechlorid, werden von C.H. Sheppard et al. in Int. SAMPE Symposium, Exhibition 31, 1426-1433 (1986) beschrieben.

Die erfindungsgemässen Polymere können in der für Thermoplasten üblichen Weise eingesetzt und verarbeitet werden. Sie können beispielsweise als Press-, Ueberzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyätherharzen die üblichen Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polymere können auch zusammen mit Duroplasten, wie beispielsweise Epoxidharze oder Bismaleinimide, oder mit Thermoplasten, wie beispielsweise Polyester, Polyamide, Polyimide, Polyolefine oder Polyurethane, insbesondere mit den konventionellen Polyamidimiden, Polyimiden und deren Vorpolymeren, verarbeitet werden.

Vorzugsweise eignen sich die erfindungsgemässen Polymere als Laminierharze für die Herstellung von Faserverbundsystemen, wobei man als Verstärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugsweise Kohlenstoff- und Metallfasern. Solche Fasern und Gewebe daraus sind im Handel erhältlich.

Wie eingangs erwähnt, können die erfindungsgemässen Polymere in an sich bekannter Weise vernetzt werden, zum Beispiel, thermisch durch Erhitzen auf etwa 50 bis 350 °C oder chemisch.

Gegenstand vorliegender Erfindung sind somit auch die durch Vernetzung der erfindungsgemässen Polymere erhaltenen Produkte.

Die thermische Vernetzung kann gegebenenfalls in Gegenwart von Radikalbildnern, z.B. anorganischen oder organischen Peroxiden, wie Kaliumperoxidsulfat oder Benzoylperoxid, Azoverbindungen, wie Azoisobutyronitril, organischen Hydroperoxiden, wie Cumolhydroperoxid oder tert.-Butylhydroperoxid, $\alpha$-Halogenacetophenon, Benzoin oder dessen Aethern, Benzophenon, Benzpinakol, Benzilacetalen, Anthrachinonen, Arsinen, Phosphinen, Thioharnstoffen, Redox-Initiatorsystemen, anaerobischen Initiatorsystemen oder Metallsalzen vorgenommen werden.

Im Falle einer Vernetzung der erfindungsgemässen Polymere mittels energiereichen Strahlen kann diese zum Beispiel mit Röntgenstrahlen, beschleunigten Elektronen, von einer $^{60}$Co-Quelle ausgesandten $\gamma$-Strahlen oder mit UV-Strahlen vorgenommen werden.

Durch die Vernetzung der erfindungsgemässen Polymere erhält man in gebräuchlichen organischen Lösungsmitteln nicht mehr lösliche Polymere, die sich ausserdem durch hohe Glasumwandlungstemperaturen sowie durch eine hohe Widerstandsfähigkeit gegenüber Wasser und Hitze auszeichnen.

<u>Beispiel 1:</u>

a) In einem 4,5 Liter Sulfierkolben, versehen mit Blattrührer, Thermometer, Kühler und $N_2$-Anschluss, werden unter $N_2$-Atmosphäre 120,23 g (0,3267 Mol) 2,2′-Di-(p-aminophenoxy)-biphenyl und 53,53 g (0,2673 Mol) 4,4′-Diaminodiphenyläther in 3200 ml getrocknetem Dimethylacetamid unter Rühren gelöst, und die erhaltene klare rötlich-braune Lösung wird auf -15° C abgekühlt. Bei dieser Temperatur werden 200,10 g (0,621 Mol) Benzophenontetracarbonsäureanhydrid innerhalb von 20 Minuten portionenweise zugegeben, wobei die Temperatur konstant auf -15 bis -13° C gehalten wird. Das Molverhältnis der Amine zum Anhydrid entspricht 22:23. Nach beendeter Zugabe des Anhydrids wird die Reaktionslösung während 1 Stunde auf 15° C und danach während 1 Stunde langsam auf Raumtemperatur erwärmt. Die Reaktionslösung wird dann noch 1 Stunde gerührt, womit die Reaktion beendet ist.

Die $\eta_{inh.}$ der Polyamidsäure, gemessen als 0,5%-ige Lösung in Dimethylacetamid (DMAA) bei 25° C, beträgt 0,52.

1500 ml der oben erhaltenen Polyamidsäurelösung werden zwecks Isolation der Polyamidsäure portionenweise in Wasser unter kräftigen Rühren eingetragen. Die ausfallende, hellgelb gefärbte flockige Polyamidsäure wird filtriert, mit Wasser gewaschen und gut getrocknet.

Zwecks Imidisierung wird die feuchte Polyamidsäure in 2 Liter Mesitylen eingetragen und in einem 4,5 l-Kolben unter Rühren zum Rückfluss erhitzt. Das meiste Wasser wird dabei in einem Wasserabscheider abgetrennt, wobei die Temperatur innerhalb von etwa 3 Stunden auf 160° C ansteigt. Die feine gelbe Suspension wird bei 160 bis 165° C während 4 Stunden gerührt, nach dem Abkühlen filtriert, mit 1 Liter Hexan nachgewaschen und im Vakuum bei 80-90° C getrocknet. Es werden 150,2 g Polyimid als feines gelbes Pulver erhalten.

12,5 g Polyimid werden bei 280° C in eine vorgewärmte Form gegeben und innerhalb von 2 Minuten wird ein Druck von $91{,}2 \cdot 10^5$ Pa aufgepresst und während 10 Minuten gehalten. Anschliessend wird die Form unter Druck auf eine Temperatur unterhalb von 200° C abgekühlt und der Pressling aus der Form entfernt.

Tg = 217° C (DMA*, 10° C/Min). *DMA = Dynamic Mechanical Analysis
Schlagbiegefestigkeit (gemäss DIN 53435) = 5,2 kJ/$m^2$ (Dynstatgerät).

b) 1600 ml der unter a) hergestellten Polyamidsäurelösung werden mit 10,6 g 3,5-Bis-(endomethylentetrahydrophthalsäureimidyl)-anilin (Dinadicanilin), entsprechend einem Molverhältnis von 1:2, bei 22° C versetzt. Die Lösung ist anfänglich trübe und geht erst nach etwa 1¹/₃ Stunden in eine klare rotbraune Lösung über. Dann wird während zwei weiteren Stunden gerührt und filtriert. Das Reaktionsprodukt wird durch Eintragung in Wasser unter starkem Rühren gefällt, filtriert, mit Wasser gewaschen und im Vakuum bei 80-90° C getrocknet. Man erhält 171,2 g der Polyamidsäure mit Dinadicanilin-Endgruppen als hellfarbenes Pulver.

Zur Imidisierung wird das Produkt in 1000 ml Mesitylen eingetragen, zum Rückfluss erhitzt und während 4 Stunden bei einer Temperatur von 158-163° C gehalten. Das ausscheidende Wasser wird via Wasserabscheider abgetrennt. Die anfängliche hellgelbe Suspension wird bei fortschreitender Imidisierung immer stärker gelb. Nach dem Abkühlen auf Raumtemperatur wird das Produkt filtriert, mit Hexan gewaschen und im Vakuum bei 130° C getrocknet. Man erhält 165,5 g des Polyimids mit Dinadicanilin-Endgruppen als feines, stark gelb gefärbtes Pulver.

12,5 g des oben erhaltenen Polyimids werden wie unter 1a) beschrieben verpresst, nur wird diesmal zwecks Vernetzung der Endgruppen der Druck von $91{,}2 \cdot 10^5$ Pa während 3 Stunden gehalten. Die erhaltenen Presslinge weisen folgende Eigenschaften auf:
Tg = 221° C (DMA, 10° C/Min).
Schlagbiegefestigkeit (DIN 53435) = 13,2 kJ/$m^2$.

Beispiel 2:

a) Unter Verwendung von 106,26 g (0,2887 Mol) 2,2′-Di-(p-aminophenoxy)-biphenyl, 47,31 g (0.2362 Mol) 4,4′-Diaminodiphenylether, 203,01 g (0,630 Mol) Benzophenontetracarbonsäureanhydrid und 3200 ml Dimethylacetamid, wobei das Verhältnis der Amine zu Benzophenontetracarbonsäureanhydrid 5:6 beträgt, erfolgt die Herstellung einer Polyamidsäure genau analog wie unter Beispiel 1a) beschrieben. Man erhält eine Polyamidsäure mit einer $\eta_{inh.}$ von 0,33 (0,5 % in DMAA bei 25° C).

Die Hälfte der Polyamidsäure(PAS)-Lösung wird wie in Beispiel 1a) beschrieben zum Polyimid weiterverarbeitet, d.h. Die PAS-Lösung wird filtriert, in Mesitylen suspendiert und bei 160-165° C während 4 Stunden imidisiert. Nach gleicher Aufarbeitung erhält man 145,7 g des entsprechenden Polyimids als feines gelber Pulver.

In der gleichen Weise wie in Beispiel 1a) beschrieben wird ein Pressling hergestellt, der folgende

Eigenschaften aufweist:
Tg = 197° C (DMA, 10° C/Min).
Schlagbiegefestigkeit (DIN 53435) = 6,3 kJ/m².

b) die andere Hälfte der PAS-Lösung wird mit Dinadicanilin im Molverhältnis von 1:2 versetzt und wie in Beispiel 1b) beschrieben imidisiert. Man erhält 120,2 g des Polyimids mit Dinadicanilid-Endgruppen als feines, stark gelb gefärbtes Pulver. Die gemäss Beispiel 1b) hergestellten Presslinge weisen folgende Eigenschaften auf:
Tg = 224° C (DMA, 10° C/Min).
Schlagbiegefestigkeit (DIN 53435) = 23,8 kJ/m².

Beispiel 3:

In diesem Beispiel sowie in den nachfolgenden Beispielen 4 bis 14 werden die endständige Aminogruppen aufweisenden Polyamidsäuren mit 3,5-Dinadicimido-1-benzoylchlorid umgesetzt. Die Polyamidsäuren werden analog Beispiel 1 a) hergestellt. Das Molverhältnis der Diamine zu Benzophenontetracarbonsäuredianhydrid (BTDA) beträgt in allen Fällen 23:22.

Eine Polyamidsäure, hergestellt aus 0,23 Mol Diamin und 0,22 Mol BTDA, wobei als Diamine 2,2′-Di-(p-aminophenoxy)-biphenyl (Diamin I) und 4,4′-Diaminodiphenylether (Diamin II) im Molverhältnis von 55:45 eingesetzt werden, wird in 800 ml Dimethylacetamid gelöst. Unter Rühren wird die Lösung auf 0-5° C abgekühlt, mit 0,020 Mol 3,5-Dinadicimido-1-benzoylchlorid versetzt und 30 Minuten bei 0-5° C gerührt. Die klare, braunrote, wenig viskose Lösung wird eine weitere Stunde gerührt, während dessen man die Temperatur in der Lösung auf Raumtemperatur ansteigen lässt. Dann werden 0,020 Mol Triethylamin hinzugegeben, und die Lösung wird eine weitere Stunde gerührt. Das ausgefallene Triethylamin-Hydrochlorid wird durch Filtration entfernt. Die nun Endgruppen der Formel

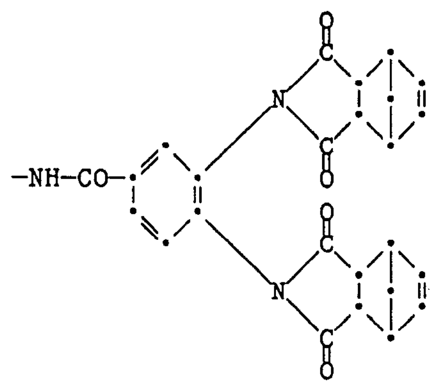

aufweisende Polyamidsäure hat eine $\eta_{inh}$ (gemessen an einer 0,5 %-igen Lösung in DMAA, 25° C) von 0,20. Die Polyamidsäure wird im Mixer mit etwa 5 Teilen Wasser gefällt, filtriert, mit etwa 3 Liter Wasser gewaschen und im Vakuum bei 80 bis 90° C getrocknet.

Imidisierung:

160 g Polyamidsäure werden mit 900 ml Mesitylen im Mixer homogenisiert. Die Suspension wird anschliessend in einem 1,5 Liter Sulfierkolben unter Rühren zum Rückfluss erwärmt und 4 Stunden am Rückfluss gekocht, wobei das sich bildende Wasser im Wasserabscheider abgetrennt wird. Nach dem Abkühlen auf Raumtemperatur wird filtriert und der Rückstand im Vakuum bei 100-110° C getrocknet.

Herstellung eines Formkörpers (80x80 mm):

35 g Polyimid werden kalt zu einer Pille der Dimension 75x75 mm gepresst. Die Polyimidpille wird bei 320° C in die vorgewärmte Pressform einer Presse gegeben. Innerhalb von 1 Minute wird gleichmässig ein Druck von $122{,}6 \cdot 10^5$ Pa aufgepresst und während 2 Stunden bei dieser Temperatur und diesem Druck

gehärtet. Nach Abkühlen auf unterhalb von 200 °C wird entformt. Der erhaltene Pressling ist dunkelbraun und transparent.
Tg = 237 °C (DMA, 10 °C/Min.)

Beispiel 4:

Amine: 2,2′-Di-(p-aminophenoxy)-biphenyl (I), 4,4′-Diaminodiphenylmethan (III)
Molverhältnis der Amine = 55:45
$\eta^{*}_{inh}$ (0,5 % in DMAA, 25 °C) = 0,19
Tg (DMA, 10 °C/Min.) = 224 °C. (* Die $\eta_{inh}$ der Polyamidsäure wird in allen Beispielen nach der Umsetzung mit Dinadicimidobenzoylchlorid wie in Beispiel 3 bestimmt.)

Beispiel 5:

Amine: I und III
Molverhältnis der Amine = 1:99
$\eta_{inh}$ = 0,19
Tg = 227 °C.

Beispiel 6:

Amine: I und m-Phenylendiamin (IV)
Molverhältnis der Amine = 55:45
$\eta_{inh}$ = 0,18
Tg = 237 °C.

Beispiel 7:

Amine: I und IV
Molverhältnis der Amine = 1:99
$\eta_{inh}$ = 0,16
Tg = 298 °C.

Beispiel 8:

Amine: I und 2,6-Diaminotoluol
Molverhältnis der Amine = 55:45
$\eta_{inh}$ = 0,18
Tg = 251 °C.

Beispiel 9:

Amine: I und 1,5-Diaminonaphthalin (V)
Molverhältnis der Amine = 55:45
$\eta_{inh}$ = 0,19
Tg = 242 °C.

Beispiel 10:

Amine: I, II und IV
Molverhältnis der Amine = 1:74,5:24,5
$\eta_{inh}$ = 0,20
Tg = 258 °C.

Beispiel 11:

Amine: I, III und V

Molverhältnis der Amine = 1:24,5:74,5
$\eta_{inh}$ = 0,19
Tg = 258° C.

Beispiel 12:

Amine: I, III und V
Molverhältnis der Amine = 10:40:50
$\eta_{inh}$ = 0,20
Tg = 267° C.

Beispiel 13:

Amine: I, III und V
Molverhältnis der Amine = 20:30:50
$\eta_{inh}$ = 0,20
Tg = 253° C.

Beispiel 14:

Amine: I, III und V
Molverhältnis der Amine = 30:20:50
$\eta_{inh}$ = 0,19
Tg = 253° C.

**Ansprüche**

1. Polyamide, Polyamid-amidsäuren oder Polyamidsäuren, enthaltend das wiederkehrende Strukturelement der Formel I

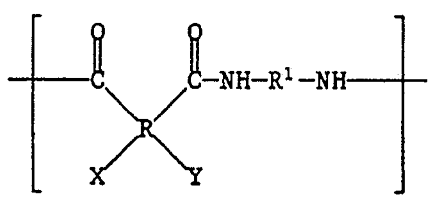

(I),

sowie die zum entsprechenden Polyamidimid bzw. Polyimid cyclisierten Derivate, worin X und Y unabhängig voneinander je für -H oder -COOH stehen,
R einen aliphatischen Rest mit mindestens 2 Kohlenstoffatomen, einen cycloaliphatischen, carbocyclisch-aromatischen oder heterocyclisch-aromatischen Rest bedeutet, wobei die Carbamid- und Carboxylgruppen an verschiedene Kohlenstoffatome gebunden sind und sich die Carboxylgruppen, falls R einen cyclischen Rest und mindestens eines von X oder Y für die Carboxylgruppe steht, je in ortho-Stellung zu einer Carbonamidgruppe befinden, und $R^1$ einen aliphatischen Rest mit mindestens zwei Kohlenstoffatomen, einen cycloaliphatischen, araliphatischen, carbocyclisch-aromatischen oder heterocyclisch-aromatischen Rest bedeutet, wobei mindestens 1 Mol % der Reste $R^1$ für einen Rest der Formel

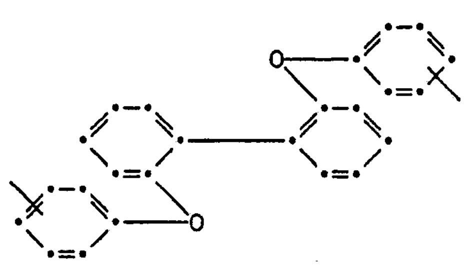

(Ia)

stehen, dadurch gekennzeichnet, dass mindestens 25 Mol % der endständigen Anhydridgruppen der Formel II oder IIa

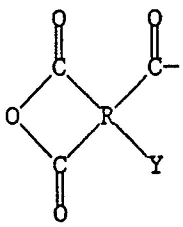 (II) oder 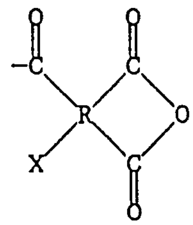 (IIa),

worin X, Y und R die gleiche Bedeutung wie in Formel I haben, als eine Gruppe der Formel III

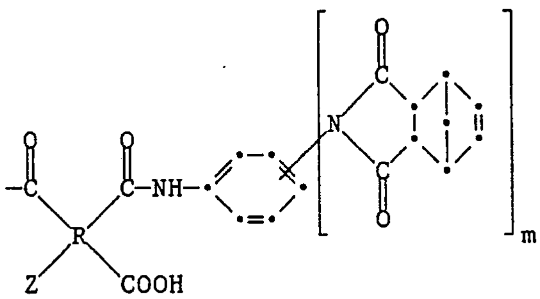 (III)

vorliegen, worin Z für X oder Y steht und m die Zahl 1 oder 2 bedeutet, mindestens 25 Mol % der endständigen Aminogruppen der Formel IV

$-NH-R^1-NH_2$ (IV)

worin $R^1$ die gleiche Bedeutung wie in Formel I hat, als eine Gruppe der Formel V, VI, VII, VIII, IX, X oder XI

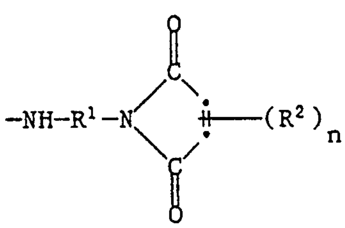 (V),

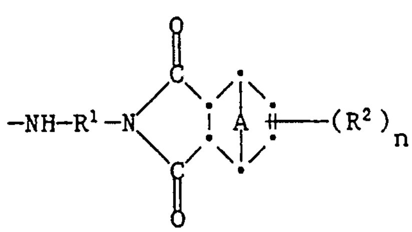 (VI),

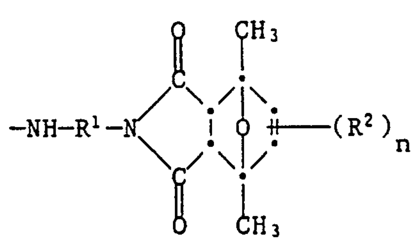 (VII),

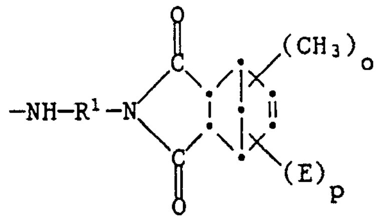

(VIII),

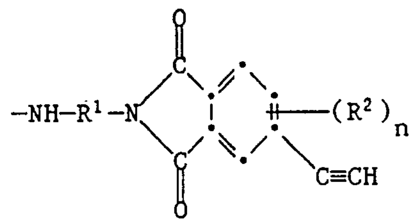

(IX),

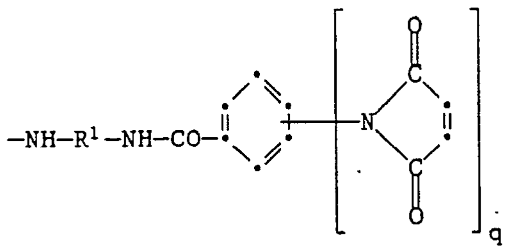

(X) oder

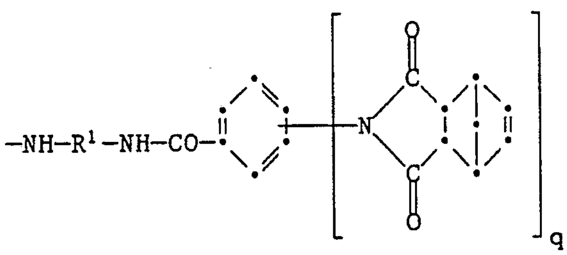

(XI)

vorliegen, worin $R^1$ die gleiche Bedeutung wie in Formel I hat,
$R^2$ für ein $C_1$-$C_4$-Alkyl, $C_1$-$C_4$-Alkoxy, ein unsubstituiertes oder durch Hydroxygruppen oder Halogenatome substituiertes Phenyl oder Naphthyl und n für Null oder die Zahl 1 oder 2 stehen,
A einen der Reste $-CH_2-$, $-\underset{|}{C}H-CH_3$, -S-, -O- oder $-SO_2-$ bedeutet,
E für Allyl oder Methallyl,
o für Null oder die Zahl 1 und
p und q je für die Zahl 1 oder 2 stehen, oder
mindestens 25 Mol % aller endständigen Anhydridgruppen und endständigen Aminogruppen der Formeln II, IIa und IV als eine Gruppe der Formel III und eine Gruppe der Formeln V bis XI vorliegen, wobei der Anteil an Gruppen der Formel III mindestens 1 Mol % beträgt.

2. Polyamide, Polyamid-amidsäuren oder Polyamidsäuren sowie die zum entsprechenden Polyamidimid bzw. Polyimid cyclisierten Derivate gemäss Anspruch 1, dadurch gekennzeichnet, dass mindestens 40 Mol % aller endständigen Anhydrid- oder Aminogruppen mit einer reaktiven Gruppe der Formel III oder V bis XI verkappt sind.

3. Polyamide, Polyamid-amidsäuren oder Polyamidsäuren sowie die zum entsprechenden Polyamidimid bzw. Polyimid cyclisierten Derivate gemäss Anspruch 1 dadurch gekennzeichnet, dass mindestens 30 Mol % der Reste $R^1$ für einen Rest der Formel Ia stehen.

4. Polyamide, Polyamid-amidsäuren oder Polyamidsäuren sowie die zum entsprechenden Polyamidimid bzw. Polyimid cyclisierten Derivate gemäss Anspruch 1, dadurch gekennzeichnet, dass im Strukturelement der Formel I R eine unsubstituierte Alkylengruppe mit 4-10 Kohlenstoffatomen, einen unsubstituierten monocyclischen, einen kondensierten bicyclischen oder einen unkondensierten bicyclischen aromatischen Rest darstellt, wobei bei letzterem die Aromatenkerne über das Brückenglied -O-, -CO-oder $-SO_2-$

miteinander verbunden sind, und $R^1$ eine Bis-(methylen)-cyclohexangruppe, einen unsubstituierten oder durch Halogenatome, Alkyl- oder Alkoxygruppen mit je 1-4 Kohlenstoffatomen substituierten monocyclischen oder unkondensierten bicyclischen aromatischen Rest und einen Rest der Formel Ia bedeutet.

5. Polyamidsäuren gemäss Anspruch 1, dadurch gekennzeichnet, dass im Strukturelement der Formel I R einen Benzolring oder das Benzophenonringsystem, X und Y je eine Carboxylgruppe und $R^1$ die 2,6-Toluol-, 1,5-Naphthalin- oder 1,3-Phenylengruppe, den 4,4′-Diphenylmethan- oder 4,4′-Diphenylätherrest und einen Rest der Formel Ia bedeuten, der in para- oder ortho-Stellung, vorzugsweise in para-Stellung, an die NH-Gruppen in Formel I gebunden ist, sowie die zum entsprechenden Polyimid cyclisierten Derivate.

6. Verfahren zur Herstellung von Polyamiden , Polyamid-amidsäuren oder Polyamidsäuren bestehend aus wiederkehrenden Strukturelementen der Formel I gemäss Anspruch 1, sowie den zum entsprechenden Polyamidimid bzw. Polyimid cyclisierten Derivaten, dadurch gekennzeichnet, dass man

(a) 1 Mol einer Verbindung enthaltend das wiederkehrende Strukturelement der Formel I und endständige Anhydridgruppen der Formeln II und IIa gemäss Anspruch 1 mit 0,5 bis 2 Mol einer Verbindung der Formel IIIa

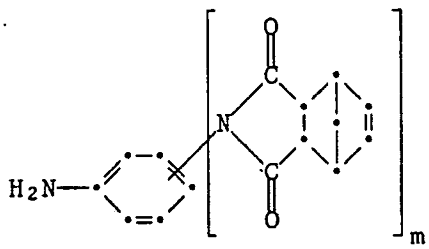

(IIIa)

umsetzt, worin m die gleiche Bedeutung wie in Formel III gemäss Anspruch 1 hat, oder

(b) 1 Mol einer Verbindung enthaltend das wiederkehrende Strukturelement der Formel I und endständige Aminogruppen der Formel IV gemäss Anspruch 1 mit 0,5 bis 2 Mol einer Verbindung der Formeln Va bis XIa

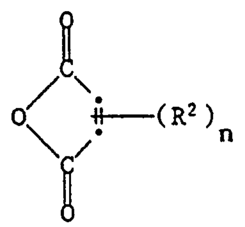

(Va),

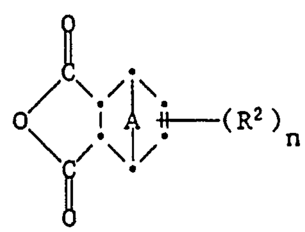

(VIa),

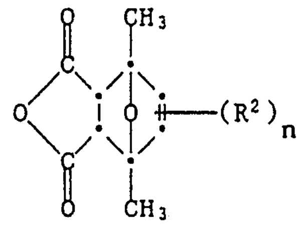

(VIIa),

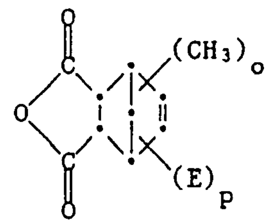

(VIIIa),

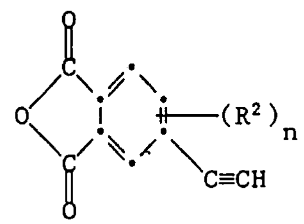

(IXa),

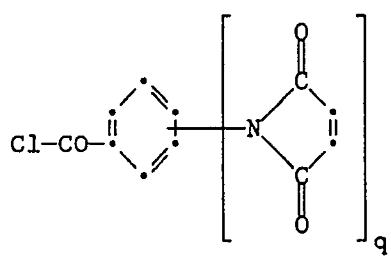

(Xa), oder

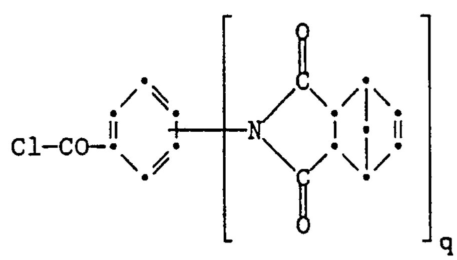

(XIa),

umsetzt, worin $R^2$, A, E, n, o, p und q die gleiche Bedeutung haben wie in Formel V bis XI gemäss Anspruch 1 haben, oder

(c) 1 Mol einer Verbindung enthaltend das wiederkehrende Strukturelement der Formel I gemäss Anspruch 1 und endständige Anhydridgruppen der Formeln II und IIa und endständige Aminogruppen der Formel IV gemäss Anspruch 1 mit 0,1 bis 1,9 Mol einer Verbindung der Formel IIIa und mit 0,1 bis 1,9 Mol einer Verbindung der Formeln Va bis XIa umsetzt, wobei die Gesamtmenge an Verbindungen der Formeln IIIa und Va bis XIa 0,5 bis 2,0 Mol beträgt, und das erhaltene Polymer, worin X oder Y sowie X und Y für den Rest -COOH stehen, gegebenenfalls anschliessend zu den Polyamidimiden bzw. Polyimiden cyclisiert.

7. Die durch Vernetzung der Polyamide, Polyamid-amidsäuren, Polyamidsäuren, Polyamidimide und Polyimide gemäss Anspruch 1 erhaltenen Produkte.

8. Faserverbundsystem enthaltend Verstärkungsfasern und ein Polyamid, eine Polyamid-amidsäure, Polyamidsäure, ein Polyamidimid oder Polyimid gemäss Anspruch 1.